(19) Europäisches Patentamt
European Patent Office
Office européen des brevets

(11) Veröffentlichungsnummer: **0 077 965**
**B1**

(12) # EUROPÄISCHE PATENTSCHRIFT

(45) Veröffentlichungstag der Patentschrift: **23.07.86**

(21) Anmeldenummer: **82109387.9**

(22) Anmeldetag: **11.10.82**

(51) Int. Cl.⁴: **C 09 B 45/01**, C 09 B 67/26, C 09 B 69/02 // C09B55/00

(54) **Verfahren zur Herstellung konzentrierter Lösungen der Lithiumsalze von 1:2-Metallkomplexazofarbstoffen.**

(30) Priorität: **23.10.81 DE 3142037**

(43) Veröffentlichungstag der Anmeldung: **04.05.83 Patentblatt 83/18**

(45) Bekanntmachung des Hinweises auf die Patenterteilung: **23.07.86 Patentblatt 86/30**

(84) Benannte Vertragsstaaten: **BE CH DE FR GB IT LI**

(56) Entgegenhaltungen:
**EP-A-0 017 114**
**FR-A-2 259 143**
**FR-A-2 285 441**

**PATENTS ABSTRACTS OF JAPAN, unexamined applications, C Section, Band 1, Nr. 102, 10. September 1977, Seite 2253C77**

(73) Patentinhaber: **BAYER AG, Konzernverwaltung RP Patentabteilung, D-5090 Leverkusen 1 Bayerwerk (DE)**

(72) Erfinder: **Mennicke, Winfried, Dr., Steglitzer Strasse 8, D-5090 Leverkusen (DE)**
Erfinder: **Scholl, Walter, Dr., Bilharzstrasse 22, D-5000 Köln 80 (DE)**
Erfinder: **Schündehütte, Karl Heinz, Dr., Klief 75, D-5090 Leverkusen 3 (DE)**

EP 0 077 965 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein Verfahren zur Herstellung von konzentrierten Lösungen der Lithiumsalze von symmetrischen und asymmetrischen 1:2-Chrom-bzw. Kobaltkomplexazofarbstoffen in gegebenenfalls wasserhaltigen organischen wassermischbaren Lösungsmitteln durch neutrale bis alkalische Kupplung sowie Metallisierung ohne Zwischenisolierung in gegebenenfalls wasserhaltigen organischen wassermischbaren Lösungsmitteln.

Es ist bereits bekannt (vgl. DE-A 2 443 483 = US-Patentschrift 4 000 965) derartige Lösungen dadurch herzustellen, daß man den nach der Kupplung isolierten metallisierbaren metallfreien Azofarbstoffzweckmäßigerweise in Form des wäßrigen Preßkuchens in einem geeigneten organischen Lösungsmittel anschlämmt und die erhaltene Suspension in Gegenwart von basischen Lithiumverbindungen mit einem metallabgebenden Mittel behandelt.

Es ist weiterhin ein Eintopfverfahren zur Herstellung konzentrierter Lösungen von 1:2-Komplexfarbstoffen bekannt geworden (vgl. DE-PS 2 918 634 - EP-A 00 19 152), bei dem Diazotierung, Kupplung und Metallisierung in speziellen organischen Lösungsmitteln ohne irgendeine Zwischenisolierung vorgenommen und die Einstellung der für die Kupplung und Metallisierung erforderlichen pH-Werte mittels basischer Alkaliverbindungen - im allgemeinen - und Natronlaugeim besonderen - durchgeführt werden.

Beide an sich gewährte Verfahren weisen indessen gewisse Nachteile, insbesondere hinsichtlich Ausbeuten, Abwasserbelastung und technischer Durchführung (z.B. Rührbarkeit der konzentrierten Systeme), auf.

Es wurde nun überraschenderweise gefunden, daß man die gewünschten hochkonzentrierten Lösungen weitestgehend ohne diese Nachteile herstellen kann, wenn man die vorbekannten Verfahren in der Weise modifiziert, daß man die pH-Einstellung für die Kupplungsreaktion mit in Wasser alkalisch reagierenden Lithiumverbindungen vornimmt.

Das Verfahren läßt sich - idealisiert - am Beispiel von o-Aminophenolen (als Diazokomponente), orthokuppelnden Phenolen (als Kupplungskomponente) und in situ hergestelltem basischem Chrom-IIIacetat (als Metallspender) durch folgende Formel darstellen:

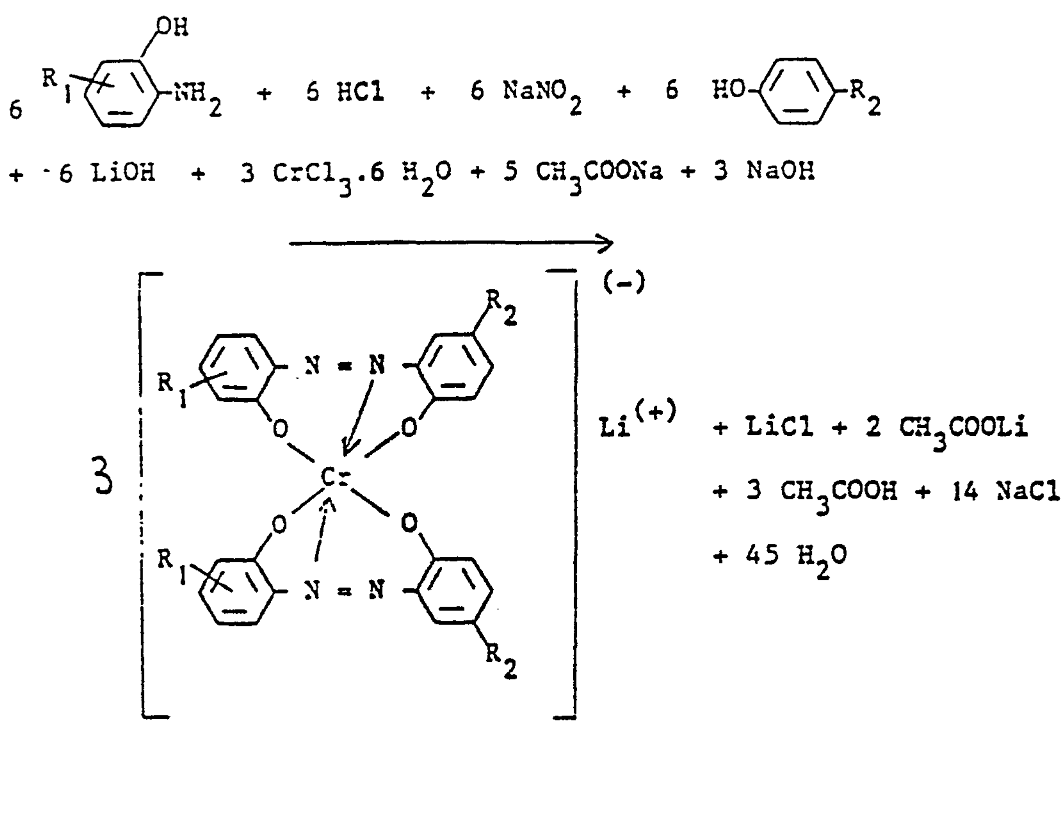

Die gebildeten Chrom-1:2-Komplexe bleiben - überwiegend als Lithiumsalze - in Lösung, während die Natriumionen überwiegend als Natriumchlorid weitgehend ausfallen und durch einfache Filtration aus dem System entfernbar sind.

Im Prinzip verläuft diese Reaktion bei Verwendung anderer Ausgangsmaterialien ähnlich ab.

Bei Verwendung von Naphthochinondiazidverbindungen, die sich von o-Aminonaphtholen der Formel

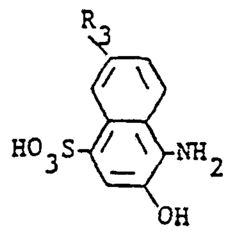

worin $R_3$ = H oder $NO_2$

ableiten, erübrigt sich die Diazotierung im Lösungsmittel ohne Zwischenisolierung. Diese Naphthochinondiazidverbindungen gelangen im allgemeinen in isolierter Form zur Anwendung, so daß das Eintopfverfahren hier erst bei der Kupplung beginnt.

Besonders vorteilhaft erweist sich die neue Verfahrensvariante bei der Umsetzung von 6-Nitro-2-naphthochinon-1-diazid-4-sulfonsäure mit 2-Naphthol, wo - bei einer gewünschten hohen Konzentration - mit LiOH als alkalisch wirkendes Mittel höhere Ausbeuten erzielt werden und ein reineres Produkt erhalten wird als mit Natronlauge als alkalisches Mittel.

Die Farbstoffe, die den erfindungsgemäßen erhaltenen Lösungen zugrunde liegen, sind im allgemeinen 1:2-Chrom- oder 1:2-Kobaltkomplexe von Mono-, Dis- oder Polyazooder Azomethin-Farbstoffen, die vor der Metallisierung als metallkomplexbildende Gruppen o,o'-Dioxy-, o-Oxy-o'-amino-, o-Oxy-o'-alkoxy-, o-Oxy-o'-carboxy oder o-Alkoxy-o'-aminoazo- oder -azomethingruppen aufweisen. Die Farbstoffe können frei von sauren Gruppen sein oder eine oder zwei saure Gruppen, vorzugsweise Sulfonsäure- oder Carbonsäuregruppen, tragen. Die beiden komplexbildenden Farbstoffe, aus denen der 1:2-Metallkomplex aufgebaut ist, können gleich oder verschieden sein; es kann sich auch um Gemische von 1:2-Metallkomplexfarbstoffen handeln, wie sie bei der Mischmetallisierung zweier oder mehrerer zur Komplexbildung befähigter Farbstoffe entstehen. Solche Farbstoffe sind in der Patentliteratur zahlreich beschrieben, beispielsweise in der oben zitierten US-A 4 000 965, Spalte 2.

Als alkalisch wirkende Lithiumsalze kommen beispielsweise Lithiumhydroxid, sekundäre oder tertiäre Lithiumphosphate und Lithiumcarbonat in Frage. Bevorzugt ist LiOH.

Geeignete organische Lösungsmittel sind insbesondere solche, die in jedem Verhältnis mit Wasser mischbar sind, oberhalb 70° C sieden und bei Raumtemperatur in flüssiger Form vorliegen.

Bevorzugte Lösungsmittel sind ein- und mehrwertige Alkohole sowie deren Monoether und -ester, wie sie beispielsweise in US-A 4 000 965 (Spalten 1/2 unten und Spalten 3/4 oben), DE-A 2 444 736, DE-A 1 719 396, DE-A 2 634 512, EP-A 0 024 609 und GB-A 1 112 032 beschrieben sind.

Weitere bevorzugte Lösungsmittel sind Trisether wie Diethylenglykoldimethylether, cyclische Ester wie Butyrolacton, cyclische Carbonate wie Ethylencarbonat oder Propylencarbonat, cyclische Carbonamide wie 2-Pyrrolidon oder N-Methylpyrrolidon, ferner Tetramethylensulfon und Hexamethylphosphorsäuretriamid. Besonders bevorzugt sind Lösungsmittel der Formel

R - O - A - OH

worin R = geradkettiges oder verzweigtes $C_1$-$C_4$-Alkyl A = gegebenenfalls durch 1 - 8 Sauerstoffatome unterbrochene $C_2$-$C_{20}$-Alkylengruppe bedeuten,

oder Gemische von diesen Lösungsmitteln mit cyclischen Carbonamiden wie 2-Pyrrolidon oder N-Methylpyrrolidon.

Ganz besonders bevorzugt sind solche Lösungsmittel, die mit Wasser kein Azeotrop bilden, wie Monoalkyldiethylenglykole. Bei derartigen Lösungsmitteln kann nämlich das in den resultierenden Farbstofflösungen durch die Nitritlösung, wäßrige Salzsäure und das Reaktionswasser in das flüssige System eingebrachte Wasser ohne großen Lösungsmittelverlust abdestilliert und die im Reaktionsgemisch enthaltenden Na-Salze auf einfache Weise praktisch vollständig abgeschieden werden. Dadurch kann auch die in der Literatur vielfach beschriebene, in der Praxis jedoch schwierig durchzuführende Phasentrennung nach vorhergehender Aussalzung entfallen.

Geeignete chromabgebende Mittel sind Salze des sechswertigen, besonders aber des dreiwertigen Chroms, wie Chromchlorid, Chromsulfat, Chromformiat, Chromacetat oder 1:1-Chromkomplexfarbstoffe, geeignete Kobaltierungsmittel sind Kobaltchlorid, Kobaltsulfat, Kobaltformiat oder Kobaltacetat.

Der Wassergehalt des Reaktionsgemisches kann innerhalb größerer Grenzen variieren und hängt im wesentlichen davon ab, ob der Farbstoff hydrophilierende Gruppen, insbesondere wasserlöslich machende Sulfonsäuregruppen, enthält oder nicht. Demgemäß muß man bei Farbstoffen, die völlig frei von derartigen Gruppen sind, mit einem höheren Lösungsmittelanteil arbeiten.

Die erfindungsgemäß erhaltenen Farbstofflösungen sind im allgemeinen durch folgende Zusammensetzung

gekennzeichnet:

10 - 40 Gew.-% eines Metallkomplexfarbstoffes als Lithiumsalz
0 - 50 Gew.-% Wasser
20 - 80 Gew.-% eines wassermischbaren organischen Lösungsmittel
und gegebenenfalls noch soviel in Wasser alkalisch wirkendes Lithiumsalz, daß ein pH von 7 - 11 herrscht.

Vorzugsweise enthalten die Lösungen 20 - 80 Gew.-% wassermischbares hydroxylgruppenhaltiges Lösungsmittel und 0 - 15 Gew.-% wassermischbares Carbonamid, insbesondere cyclisches Carbonamid.

Nach Ablauf der Reaktionen im Eintopf liegt in der fertigen Farbstofflösung ein pH von 4 bis 11-vorzugsweise von 5,5 bis 8,5 - vor. Das neue Verfahren ist auch zur Herstellung von unsymmetrischen 1:2-Chrommischkomplexen geeignet. Dabei kann man ebenfalls direkt zu einer stabilen Lösung des 1:2-Komplexfarbstoffes gelangen, wenn man beispielsweise die Lösung des nach dem erfindungsgemäßen Verfahren erhaltenen Chrom-1:1-Komplexfarbstoffes und eines zur Komplexbildung befähigten Azo- oder Azomethinfarbstoffes miteinander reagieren läßt. Nach einer anderen, vorteilhafteren Variante erhält man ebenfalls unsymmetrische 1:2-Chrommischkomplexe, wenn man erfindungsgemäß diazotiert und kuppelt und anschließend die Chromierung ohne Zwischenisolierung mit Hilfe eines in üblicher Weise hergestellten 1:1-Chromkomplexfarbstoffs als Chromierungsmittel vornimmt.

Die nach dem neuen Verfahren zugänglichen konzentrierten Lösungen bleiben auch nach langem Lagern oder bei Temperaturen bis zu -15°C flüssig.

Bei den erfindungsgemäß erhaltenen Lösungen handelt es sich um sogenannte Stammansätze, die mit Wasser problemlos mischbar sind und sich deshalb ausgezeichnet zur Herstellung von Färbebädern oder Druckpasten zum Färben und Bedrucken von stickstoffhaltigen Fasermaterialien, wie Wolle, Seide, Leder sowie synthetische Polyamidoder Polyurethanfasern, sowie Fasergemische, beispielsweise ein Gemisch aus Wolle und Polyamid eignen. Der Färbeprozeß wird in üblicher Weise in einem neutralen bis schwach sauren Bad durchgeführt.

Das neue Verfahren sei anhand der folgenden Beispiele näher erläutert.

**Beispiel 1**

154 g = (1 Mol) 5-Nitro-2-aminophenol werden in
1380 g Diethylenglykolmonoehtylether durch kurzes Aufrühren gelöst und mit
255 ml 30 %iger Natriumnitritlösung versetzt. Durch äußeres Kühlen mit Eiswasser wird die Temperatur bei 15-20°C gehalten. Man läßt innerhalb von 15 Minuten
ca. 110 ml Salzsäure (30 %) zutropfen bis ein pH-Wert von 3,5-3 erreicht ist. Ca. 15 Minuten später ist mit Nitritreagenz kein Nitrit mehr nachweisbar.

Man trägt
174 g (1 Mol) 1-phenyl-3-methyl-5-pyrazolon und nach Verrühren
42 g (1 Mol) $LiOH.H_2O$ ein. Der pH-Wert steigt langsam auf 7-8 an. Die Suspension bleibt dünnflüssig und gut rührbar.

Eine Stunde später werden
68,5 g (0,84 Mol) wasserfreies Natriumacetat und
20 g (0,5 Mol) NaOH Pulver eingetragen. Man rührt kräftig durch, setzt
133,2 g (0,5 Mol) $CrCl_3.6H_2O$ zu, erhitzt das ganze auf 140°C und destilliert das eingeschleppte Wasser - ca. 366 ml - und das Reaktionswasser-135 ml - gleichzeitig ab. Die Elektrolyte fallen aus. In der Lösung sind nach Abtrennung des Salzes nur Li+-Ionen nachweisbar. In analoger Weise lassen sich andere 1:2-Chromkomplexfarbstoffe herstellen, beispielsweise die in den Spalten 11-28 der US-Patentschrift 4 000 965 beschriebenen.

**Beispiel 2**

Gemäß folgender idealisierter Gleichung

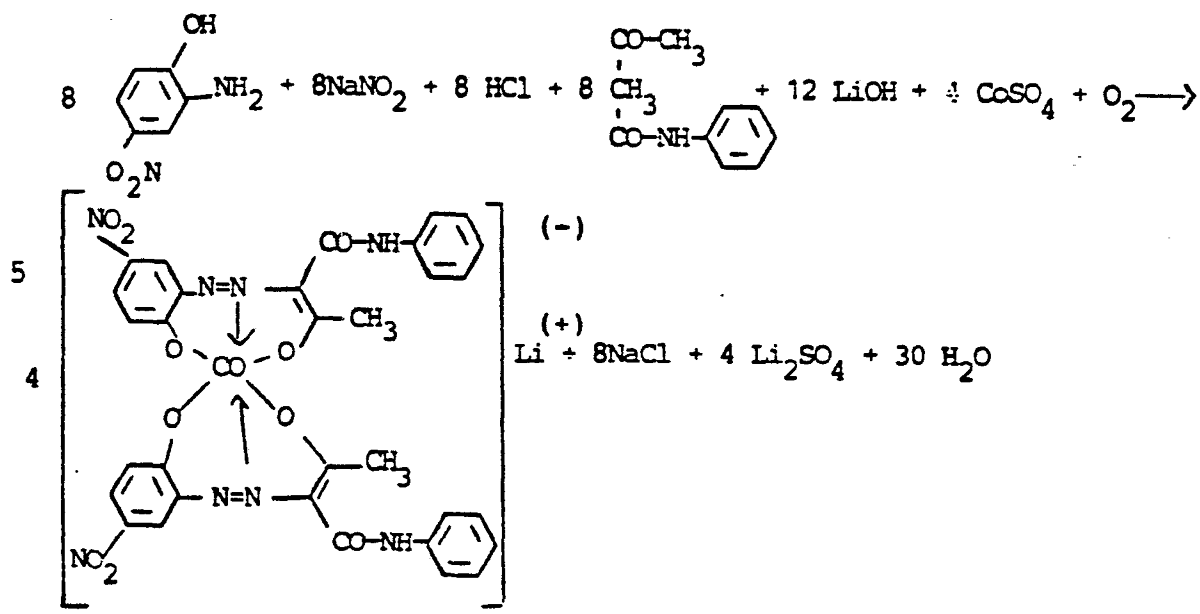


werden erfindungsgemäß 1:2-Kobaltkomplexe hergestellt:

154 g (1 Mol) 4-Nitro-2-amino-1-hydroxybenzol werden

in

1069 g Ethylgykol gelöst und mit

230 ml (1 Mol) 30 %iger $NaNO_2$-Lösung versetzt. Bei äußerer Kühlung mit Eiswasser gibt man bei 10°C innerhalb von 30 Minuten

104 ml 30%ige Salzsäure zu. Nach 30 Minuten werden

177 g (1 Mol) Acetessiganilid eingetragen. Nach Zugabe von

42 g (1 Mol) $LiOH.H_2O$ ist die Kupplung rasch beendet. Die rührbare Suspension wird auf 70°C erwärmt und mit

21 g $LiOH.H_2O$ = 0,5 Mol und

140,55 g $CoSO_3.7H_2O$ = 0,5 Mol, gelöst in 220 ml Wasser, versetzt.

Die Kobaltierung ist nach etwa 1 h beendet. Man läßt auf Raumtemperatur abkühlen, trennt die ausgefallenen Elektrolyte ab und erhält eine lagerstabile Farbstofflösung.

**Beispiel 3**

144 g (1 Mol) 2-Naphthol werden durch kurzes Verrühren in 1,4 kg Ethylglykolmonoethylether gelöst. Man setzt 105 g (2,5 Mol) $LiOH.H_2O$ zu und trägt bei äußerer Kühlung im Verlauf von etwa 2 Stunden 507 g der wäßrig feuchten Paste, welche 295 g (1 Mol) 6-Nitro-2-naptho-chinon-1-diazid-4-sulfonsäure enthält, so ein, daß die Temperatur nicht über 20°C ansteigt. Der pH wird durch gelegentliche Zugabe von insgesamt ca. 8,4 g (0,2 Mol) $LiOH.H_2O$ bei 10-11 gehalten. Nach etwa 6 Stunden ist keine 6-Nitro-2-naphthochinon-1-diazid-4-sulfonsäure mehr nachweisbar. Die Ausbeute an Kupplungsprodukt beträgt 96 % der Theorie. Die sirupartige Lösung wird nun auf 60-70°C erwärmt und innerhalb von 1 Stunde mit 128 g (0,48 Mol) $CrCl_3.6H_2O$ und dann mit 65,6 g (0,8 Mol) Natriumacetat versetzt. Die dünnflüssige Suspension geht beim nachfolgenden Erhitzen bis zum Siedepunkt rasch in Lösung. Der pH liegt im Bereich von 5 bis 6. Nach einer halben Stunde Erhitzen unter Rückfluß ist die Chromierung beendet. Man läßt auf Raumtemperatur abkühlen, trennt die ausgefallene Elektrolyte durch Filtration ab und erhält eine konzentrierte lagerstabile schwarze Farbstofflösung.

**Beispiel 4**

144 g (1 Mol) 2-Naphthol und 100 g $LiOH.H_2O$ werden in 1 l Ethylglykolmonoethylether und 200 ml N-Methylpyrrolidon gelöst. Unter äußerer Kühlung trägt man bei Temperaturen unter 20°C im Verlauf von etwa 2 Stunden 507 g wäßrig feuchte Paste ein, welche 295 g (1 Mol) 6-Nitro-2-napthochinon-1-diazid-4-sulfonsäure enthält. Durch gelegentliches Nachsetzen von insgesamt 10-15 g $LiOH.H_2O$ bis zum Erreichen eines pH-Wertes von 11 bleibt das Gemisch dünnflüssig. Die Kupplung ist nach etwa 5 Stunden beendet. Man erwärmt auf 50-70°C und läßt ab 50°C innerhalb etwa 1 Stunde 230 g einer wäßrigen Chromacetatlösung, der 38 g $Cr_2O_3$ (0,5 Mol Chrom) zugrunde liegen, zutropfen. Der pH wird gegebenenfalls mit wenigen Tropfen Eisessig auf 6-5 eingestellt. Nach 1- bis 2-stündigem Erhitzen unter Rückfluß ist die Chromierung beendet. Am nächsten Morgen trennt man die Elektrolyte ab und erhält eine lagerstabile schwarze konzentrierte Farbstofflösung.

**Patentansprüche**

1. Verfahren zur Herstellung von konzentrierten Lösungen der Lithiumsalze von symmetrischen und asymmetrischen 1:2-Chrom- bzw. Kobaltkomplexazofarbstoffen in gegebenenfalls wasserhaltigen organischen wassermischbaren Lösungsmitteln durch neutrale bis alkalische Kupplung sowie Metallisierung ohne Zwischenisolierung in gegebenenfalls wasserhaltigen organischen wassermischbaren Lösungsmitteln, dadurch gekennzeichnet, daß man die pH-Einstellung für die Kupplungsreaktion mit in Wasser alkalisch reagierenden Lithiumverbindungen vornimmt.

2. Verfahren nach Anspruch 1 zur Herstellung von Lösungen von asymmetrischen 1: 2- Metallkomplexen, dadurch gekennzeichnet, daß man in entsprechender Weise zunächst den 1:1-Metallkomplex herstellt und diesen anschließend ohne Zwischenisolierung mit einem separat hergestellten metallfreien zur Komplexbildung befähigten Azo- oder Azomethinfarbstoff umsetzt.

3. Verfahren nach Anspruch 1, zur Herstellung von Lösungen von asymmetrischen 1: 2- Metallkomplexen, dadurch gekennzeichent, daß man in entsprechender Weise zunächst diazotiert und kuppelt und anschließend den dabei entstehenden metallfreien Azofarbstoff ohne Zwischenisolierung mit einem separat hergestellten 1: 1-Metallkomplex als Metallisierungsmittel zum 1: 2-Metallkomplex umsetzt.

4. Verfahren nach Ansprüchen 1 - 3, dadurch gekennzeichnet, daß man als alkalisch reagierende Lithiumverbindung Lithiumhydroxid verwendet.

5. Verfahren nach Ansprüchen 1 - 3, dadurch gekennzeichnet, daß man bei der Kupplung einen pH-Wert von 7 bis 11 einstellt.

**Revendications**

1. Procédé de fabrication de solutions concentrées des sels de lithium de colorants azoïques complexes de chrome ou de cobalt 1:2 symétriques et asymétriques dans des solvants organiques miscibles à l'eau et renfermant éventuellement de l'eau, par copulation neutre à alcaline et aussi par métallisation sans isolation intermédiaire dans des solvants organiques miscibles à l'eau et renfermant éventuellement de l'eau, caractérisé en ce qu'on entreprend le réglage du pH pour la réaction de copulation avec des composés de lithium ayant une réaction alcaline dans l'eau.

2. Procédé selon la revendication 1 pour la fabrication de solutions de complexes métalliques 1:2 asymétriques, caractérisé en ce qu'on prépare de manière appropriée tout d'abord le complexe métallique 1:1 et fait ensuite réagir celui-ci, sans isolation intermédiaire, avec un colorant azoïque ou azométhinique apte à former un complexe et exempt de métal, lequel a été prépare séparement.

3. Procédé selon la revendication 1 pour la fabrication de solutions de complexes métalliques 1:2 asymétriques, caractérisé en ce qu'on diazote tout d'abord et copule de la manière appropriée et fait réagir ensuite le colorant azoïque exempt de métal ainsi obtenu, sans isolation intermédiaire, avec un complexe métallique 1:1 préparé séparément en tant qu'agent de métallisation pour obtenir un complexe métallique 1:2.

**Claims**

1. Process for the preparation of concentrated solutions of the lithium salts of symmetrical and asymmetrical 1:2 chromium and cobalt complex azo dyestuffs in optionally water-containing organic water-miscible solvents by neutral to alkaline coupling and metallisation without intermediate isolation in optionally water-containing organic water-miscible solvents, characterised in that the pH adjustment for the coupling reaction is carried out using lithium compounds which have an alkaline reaction in water.

2. Process according to Claim 1 for the preparation of solutions of asymmetrical 1: 2 metal complexes, characterised in that the 1:1 metal complex is first prepared in an appropriate way and this is then reacted without intermediate isolation with a separately prepared metal-free azo or azomethine dyestuff which is capable of complex formation.

3. Process according to Claim 1 for the preparation of solutions of asymmetrical 1: 2 metal complexes, characterised in that diazotising and coupling are first carried out in an appropriate way and then the resulting metal-free azo dyestuff is reacted without intermediate isolation with a separately prepared 1: 1 metal complex as metallisation agent to give the 1: 2 metal complex.